# EUROPÄISCHE PATENTSCHRIFT

(11) **EP 2 544 840 B1**
(45) Veröffentlichungstag und Bekanntmachung des Hinweises auf die Patenterteilung: **10.09.2014**
(21) Anmeldenummer: 11707832.9
(22) Anmeldetag: 07.03.2011
(51) Int. Cl.: B22F 3/105, B22F 5/04, F01D 5/28, F01D 25/00, B22F 5/00

(54) **VERFAHREN UND VORRICHTUNG ZUR HERSTELLUNG EINES BAUTEILS**
A PROCESS AND APPARATUS FOR THE MANUFACTURE OF A COMPONENT
UN PROCÉDÉ ET UN DISPOSITIF SUR FABRICATION D'UN COMPOSANT

(30) Priorität: 11.03.2010 DE 102010011059
(43) Veröffentlichungstag der Anmeldung: 16.01.2013
(60) Teilanmeldung: 13197768.8
(73) Patentinhaber: MTU Aero Engines AG, 80995 München (DE)
(72) Erfinder: DUSEL, Karl-Heinz, 85716 Unterschleißheim (DE); HUTTNER, Roland, 82287 Jesenwang (DE); BAYER, Erwin, 85221 Dachau (DE); MÜCKE, Michael, 61206 Wöllstadt (DE)
(86) Internationale Anmeldenummer: PCT/EP2011/053382
(87) Internationale Veröffentlichungsnummer: WO 2011/110521

(56) Entgegenhaltungen:
- WO-A1-2008/046388
- WO-A1-2011/050765
- WO-A2-2011/050790

## Beschreibung

Die vorliegende Erfindung betrifft ein Verfahren der im Oberbegriff des Patentanspruchs angegebenen Art zur Herstellung eines Bauteils. Die Erfindung betrifft weiterhin eine Vorrichtung der im Oberbegriff des Patentanspruchs 12 angegebenen Art zur Herstellung eines Bauteils, insbesondere eines Bauteils einer Turbine oder eines Verdichters.

Verfahren und Vorrichtungen zur Herstellung eines Bauteils sind in einer großen Vielzahl bekannt. Insbesondere sind generative Fertigungsverfahren (sog. Rapid Manufacturing- bzw. Rapid Prototyping-Verfahren) bekannt, bei denen das Bauteil schichtweise aufgebaut wird. Vorwiegend metallische Bauteile können beispielsweise durch Elektronenstrahlschmelz- oder - sinterverfahren hergestellt werden. Bei einem derartigen Verfahren wird zunächst schichtweise mindestens ein pulverförmiger Bauteilwerkstoff auf eine Bauteilplattform im Bereich einer Aufbau- und Fügezone aufgetragen. Anschließend wird der Bauteilwerkstoff schichtweise lokal verschmolzen und/oder versintert, indem dem Bauteilwerkstoff im Bereich der Aufbau- und Fügezone Energie mittels wenigstens eines Elektronenstrahls zugeführt wird. Der Elektronenstrahl wird dabei in Abhängigkeit einer Schichtinformation der jeweils herzustellenden Bauteilschicht gesteuert. Nach dem Verschmelzen und/oder Versintern wird die Bauteilplattform schichtweise um eine vordefinierte Schichtdicke abgesenkt. Diese Schritte werden dann bis zur endgültigen Fertigstellung des Bauteils wiederholt. Die WO 2008/046388 A1 beschreibt ein derartiges Verfahren und eine entsprechende Vorrichtung zur Herstellung eines Turbinenteils.

Als nachteilig an derzeit bekannten Verfahren und Vorrichtungen ist der Umstand anzusehen, dass diese entweder vergleichsweise geringe Aufbauraten bei erhöhter Fertigungspräzision oder höhere Aufbauraten bei vergleichsweise geringer Fertigungspräzision erlauben. Hierdurch ergeben sich bei der Fertigung von Bauteilen für Strömungsmaschinen, insbesondere bei hohlen Strukturbauteilen für Turbinen oder Verdichter, lange Produktionszeiten und entsprechend hohe Herstellungskosten.

Aufgabe der vorliegenden Erfindung ist es, ein Verfahren sowie eine Vorrichtung der eingangs genannten Art zur Herstellung eines Bauteils zu schaffen, welche sowohl eine hohe Aufbaurate als auch eine hohe Fertigungspräzision ermöglichen.

Die Aufgabe wird erfindungsgemäß durch ein Verfahren mit den Merkmalen des Patentanspruchs 1 und eine Vorrichtung mit den Merkmalen des Patentanspruchs 12 gelöst. Vorteilhafte Ausgestaltungen mit zweckmäßigen Weiterbildungen der Erfindung sind in den jeweiligen Unteransprüchen angegeben.

Bei einem erfindungsgemäßen Verfahren zur Herstellung eines Bauteils, insbesondere eines Bauteils einer Turbine oder eines Verdichters, ist es vorgesehen, dass durch Wechselwirkung des Elektronenstrahls mit dem Bauteilwerkstoff emittierte Elektronen erfasst werden, wonach anhand der emittierten Elektronen eine eine Topographie des verschmolzenen und/oder versinterten Bauteilwerkstoffs charakterisierende Werkstoffinformation ermittelt wird. Das erfindungsgemäße Verfahren ermöglicht somit im Unterschied zum Stand der Technik eine Kontrolle der Fertigungspräzision während der Herstellung des Bauteils mit Hilfe einer rasterelektronenmikroskopartigen Oberflächenanalyse der aktuellen Bauteilschicht. Da Elektronen eine sehr viel kleinere Wellenlänge als sichtbares Licht haben, kann die Topographie dabei unter Verwendung des ohnehin vorhandenen Elektronenstrahls mit einer sehr hohen Auflösung ermittelt werden. Als emittierte Elektronen werden bevorzugt Sekundärelektronen, rückgestreute Elektronen und/oder Auger-Elektronen mittels einer entsprechenden Detektionseinrichtung erfasst und zur Ermittlung der die Topographie charakterisierenden Werkstoffinformation herangezogen. Die Ermittlung der Werkstoffinformation kann beispielsweise mittels einer mit der Detektionseinrichtung gekoppelten Ermittlungseinrichtung erfolgen. Die Kenntnis der topographischen Werkstoffinformation ermöglicht in der Folge eine sofortige Korrektur bzw. Anpassung der mittels des Elektronenstrahls zugeführten Energie, wodurch die zur Herstellung des Bauteils benötigte Aufbauzeit erheblich verkürzt wird und sowohl hohe Aufbauraten als auch hohe Fertigungspräzisionen erzielt werden. Zudem kann in vielen Fällen auf etwaige Nachbearbeitungsschritte verzichtet werden, wodurch sich weitere Zeit- und Kosteneinsparungen ergeben. Es ist dabei zu betonen, dass neben Bauteilen für Strömungsmaschinen grundsätzlich beliebige Bauteile mit Hilfe des erfindungsgemäßen Verfahrens hergestellt werden können.

In einer vorteilhaften Ausgestaltung der Erfindung ist vorgesehen, dass die Elektronen einmal und/oder bei mehreren Wiederholungen der Schritte a) bis c) und/oder bei jeder Wiederholung der Schritte a) bis c) erfasst werden. Hierdurch kann das Verfahren besonders flexibel und zeitoptimiert durchgeführt werden, da die Topographie der jeweiligen Bauteilschicht vorzugsweise nur dann ermittelt wird, wenn es sich um eine für die Fertigungspräzision relevante Bauteilschicht handelt.

In einer weiteren vorteilhaften Ausgestaltung der Erfindung ist vorgesehen, dass in Schritt b) eine räumliche Ablenkung und/oder eine Fokussierung und/oder eine thermische Leistung des wenigstens einen Elektronenstrahls in Abhängigkeit einer Schichtinformation des herzustellenden Bauteils und/oder in Abhängigkeit der Werkstoffinformation eingestellt wird. Hierdurch kann das Bauteil sehr schnell und gleichzeitig hochgenau hergestellt werden. Beispielsweise kann in Bauteilbereichen mit größerer Wandstärke ein größerer Brennfleck und/oder eine hohe Leistung des Elektronenstrahls eingestellt werden. In Bauteilbereichen mit geringen bzw. filigranen Wandstärken kann demgegenüber eine niedrige Leistung und/oder ein kleiner Brennfleck des Elektronenstrahls eingestellt werden. Da durch die Erfassung der emittierten Elektronen gleichzeitig die Möglichkeit zur direkten Überwachung der entstandenen Topographie gegeben ist, kann die räumliche Ablenkung und Fokussierung des Elektronenstrahls situationsabhängig und synchron mit der Leistung gesteuert werden. Wird beispielsweise eine zu große Abweichung zwischen einer Soll- und der ermittelten Ist-Topographie der Bauteilschicht festgestellt, können die räumliche Ablenkung, Fokussierung und/oder thermische Leistung des Elektronenstrahls unmittelbar verändert und angepasst werden. Ein Verzug oder sonstige Abweichungen der Ist- von der Soll-Geometrie des Bauteils können somit bei der Herstellung des Bauteils zuverlässig verhindert werden. Die Einstellung des Elektronenstrahls wird vorzugsweise mit Hilfe einer digitalen Steuer- und/oder Regeleinrichtung, eines Ablenkverstärkers oder dergleichen durchgeführt, um eine schnelle und präzise Anpassung an die Eigenschaften der jeweiligen Bauteilschicht zu gewährleisten. Dabei kann grundsätzlich vorgesehen sein, dass der Elektronenstrahl so schnell auf zwei oder mehr unterschiedliche Positionen gelenkt wird, dass der Bauteilwerkstoff an all diesen Positionen quasi "gleichzeitig" verschmolzen bzw. versintert wird. Bei Bedarf kann der Elektronenstrahl zu diesem Zweck in mehrere Teilstrahlen aufgeteilt werden. Weiterhin kann vorgesehen sein, dass der Elektronenstrahl wiederholt auf diese unterschiedlichen Positionen gelenkt wird, so dass der Schmelz- bzw. Sinterprozess an den betreffenden Positionen für einen gewünschten Zeitraum zumindest im Wesentlichen durchgängig aufrechterhalten wird.

Weitere Vorteile ergeben sich, indem die räumliche Ablenkung und/oder die Fokussierung und/oder die thermische Leistung des wenigstens einen Elektronenstrahls mittels zumindest eines elektromagnetischen und/oder magnetischen Felds eingestellt wird. Hierdurch kann der Elektronenstrahl besonders schnell, einfach und variabel durch Änderung des elektromagnetischen und/oder magnetischen Felds eingestellt werden, wodurch eine besonders hohe Aufbaurate und Fertigungspräzision bei der Herstellung des Bauteils erzielt wird.

Weitere Vorteile ergeben sich dadurch, dass der Bauteilwerkstoff in Schritt b) durch wenigstens zwei, vorzugsweise durch mindestens vier, Elektronenstrahlen verschmolzen und/oder versintert wird. Hierdurch können mehrere Schmelz- und/oder Sinterbereiche gleichzeitig erzeugt werden, wodurch bei höherer Maßhaltigkeit eine signifikante Beschleunigung der Aufbaugeschwindigkeit erzielt wird. Darüber hinaus entfällt die bisherige Bauraumbeschränkung von Elektronenschmelzverfahren, so dass auch große Bauteile problemlos hergestellt werden können. Die zwei oder mehr Elektronenstrahlen können dabei grundsätzlich durch Aufteilung eines Elektronenstrahls und/oder durch mehrere Elektronenquellen erzeugt werden. Die Aufteilung des Elektronenstrahls kann parallel oder sequenziell erfolgen. Vorzugsweise findet eine sequenzielle Aufteilung Verwendung. Bei sequenzieller Aufteilung erfolgt diese derart schnell, dass makroskopisch mehrere Strahlen entstehen. Der aufgeteilte Strahl kann sequenziell zu unterschiedlichen Orten gelenkt werden. Dadurch kann an mehreren Orten zeitgleich gesintert bzw. verschmolzen werden. Die materialabhängige Zeitkonstante für das Sintern ist vorzugsweise deutlich größer als die Zeitkonstante der Strahlteilung. Die Elektronenstrahlen können in Schritt b) trägheitsfrei in drei Dimensionen, in der Auslenkung und im Energieniveau gesteuert werden, so dass nicht nur beliebig große, sondern auch besonders komplexe Bauteile hergestellt werden können. Durch zusätzliche Elektronenquellen kann die Aufbau- und Fügezone zudem nahezu unbeschränkt erweitert werden, so dass das Verfahren parallelisierbar ist und einfach skaliert werden kann. Dabei kann grundsätzlich vorgesehen sein, dass die Elektronenstrahlen so schnell auf zwei oder mehr unterschiedliche Positionen gelenkt werden, dass der Bauteilwerkstoff an all diesen Positionen quasi "gleichzeitig" verschmolzen bzw. versintert wird. Weiterhin kann vorgesehen sein, dass mindestens einer der Elektronenstrahlen in zwei oder mehr Teilstrahlen aufgeteilt wird. Weiterhin kann vorgesehen sein, dass die Elektronenstrahlen wiederholt auf diese unterschiedlichen Positionen gelenkt werden, so dass der Schmelz- bzw. Sinterprozess an den betreffenden Positionen nicht abbricht und durchgängig aufrechterhalten wird.

In einer weiteren vorteilhaften Ausgestaltung der Erfindung ist vorgesehen, dass eine relative Position zumindest einer Elektronenquelle, die zur Herstellung wenigstens eines Elektronenstrahls verwendet wird, gegenüber der Aufbau- und Fügezone in Abhängigkeit der Schichtinformation des herzustellenden Bauteils und/oder in Abhängigkeit der Werkstoffinformation eingestellt wird. Dies erlaubt eine weitere Verbesserung der Fertigungsqualität und -präzision unter optimaler Berücksichtigung der Eigenschaften der jeweiligen Bauteilschicht.

Indem zumindest Schritt b) unter Vakuum, insbesondere unter Hochvakuum, durchgeführt wird, wird eine Ablenkung des Elektronenstrahls bzw. der Elektronenstrahlen sowie der durch Wechselwirkung des Elektronenstrahls mit dem Bauteilwerkstoff emittierten Elektronen zuverlässig vermieden. Hierdurch steigt sowohl die Herstellungsgeschwindigkeit und -präzision als auch die Präzision der Topographie-Ermittlung der vermessenen Bauteilschicht. Darüber hinaus wird das Bauteil praktisch sauerstofffrei hergestellt, wodurch das Bauteil auch aus hochreinen oder sauerstoffempfindlichen Bauteilwerkstoffen gefertigt werden kann.

Um eine besonders hohe Fertigungspräzision sicherzustellen, ist in weiterer Ausgestaltung der Erfindung vorgesehen, dass das Bauteil nach seiner Herstellung oberflächenbearbeitet, insbesondere feinbearbeitet wird. Hierdurch können beispielsweise die hohen Qualitätsanforderungen an Triebwerksbauteile für Turbinen oder Verdichter zuverlässig erfüllt werden.

In einer weiteren vorteilhaften Ausgestaltung der Erfindung ist vorgesehen, dass eine Bauteiloberfläche des Bauteils mittels wenigstens eines Elektronenstrahls, insbesondere durch Elektronenstrahl-Lithographie und/oder Umschmelzen, bearbeitet wird. Hierdurch kann die Bauteiloberfläche geglättet bzw. mit einer vorbestimmten Oberflächenstruktur versehen werden. Der Elektronenstrahl kann grundsätzlich mit derselben Elektronenquelle erzeugt werden, die bereits zum Verschmelzen und/oder Versintern des Bauteilwerkstoffs verwendet wurde. Alternativ oder zusätzlich kann natürlich auch eine separate Elektronenquelle für die Feinbearbeitung vorgesehen sein.

Weitere Vorteile ergeben sich, wenn bei der Bearbeitung des Bauteils durch Wechselwirkung des Elektronenstrahls mit der Bauteiloberfläche emittierte Elektronen erfasst werden, wonach anhand der emittierten Elektronen eine eine Topographie des Bauteils charakterisierende Bauteilinformation ermittelt wird. Hierdurch können die vorstehend im Zusammenhang mit der Herstellung des Bauteils erläuterten Vorteile im Hinblick auf unmittelbare Qualitätsüberwachung des momentanen Herstellungsschritts auch bei der Feinbearbeitung erzielt werden. Vorzugsweise ist vorgesehen, dass die vorstehend beschriebene Detektionseinrichtung auch während des Feinbearbeitungsschritts zum Erfassen der emittierten Elektronen verwendet wird. Die Ermittlung der Bauteilinformation kann beispielsweise mittels der mit der Detektionseinrichtung gekoppelten Ermittlungseinrichtung erfolgen.

In einer weiteren vorteilhaften Ausgestaltung der Erfindung ist vorgesehen, dass eine räumliche Ablenkung und/oder eine Fokussierung und/oder eine thermische Leistung des wenigstens einen Elektronenstrahls in Abhängigkeit der Bauteilinformation eingestellt wird. Auch hierdurch wird eine besonders hohe Fertigungspräzision bei der Feinbearbeitung der Bauteiloberfläche erzielt.

Ein weiterer Aspekt der Erfindung betrifft eine Vorrichtung zur Herstellung eines Bauteils, insbesondere eines Bauteils einer Turbine oder eines Verdichters, wobei die Vorrichtung mindestens eine Pulverzuführung zum Auftrag von mindestens einem pulverförmigen Bauteilwerkstoff auf eine Bauteilplattform sowie mindestens eine Elektronenquelle umfasst, mittels welcher im Bereich einer Aufbau- und Fügezone der Bauteilplattform zumindest ein Elektronenstrahl für ein schichtweises und lokales Verschmelzen und/oder Versintern des Bauteilwerkstoffs erzeugbar ist. Erfindungsgemäß wird dabei eine erhöhte Aufbaurate des Bauteils bei gleichzeitig erhöhter Fertigungspräzision dadurch ermöglicht, dass die Vorrichtung wenigstens eine Detektionseinrichtung zum Erfassen von durch Wechselwirkung des Elektronenstrahls mit dem Bauteilwerkstoff emittierten Elektronen sowie eine mit der Detektionseinrichtung gekoppelte Ermittlungseinrichtung umfasst, mittels welcher anhand einer die erfassten Elektronen charakterisierenden Steuerinformation der Detektionseinrichtung eine eine Topographie des verschmolzenen und/oder versinterten Bauteilwerkstoffs charakterisierende Werkstoffinformation ermittelbar ist. Die erfindungsgemäße Vorrichtung ermöglicht somit im Unterschied zum Stand der Technik während der Herstellung des Bauteils eine präzise Kontrolle durch eine rasterelektronenmikroskopartige Oberflächenanalyse der aktuellen Bauteilschicht. Da Elektronen eine sehr viel kleinere Wellenlänge als sichtbares Licht haben, kann die Topographie dabei unter Verwendung des ohnehin vorhandenen Elektronenstrahls mit einer sehr hohen Auflösung ermittelt werden. Als emittierte Elektronen werden bevorzugt Sekundärelektronen, rückgestreute Elektronen und/oder Auger-Elektronen mittels der Detektionseinrichtung erfasst und zur Ermittlung der die Topographie charakterisierenden Werkstoffinformation als Steuerinformation an die Ermittlungseinrichtung übermittelt. Die Kenntnis der topographischen Werkstoffinformation ermöglicht in der Folge eine sofortige Korrektur bzw. Anpassung der mittels des Elektronenstrahls zugeführten Energie, wodurch sich die zur Herstellung des Bauteils benötigte Aufbauzeit bei gleichzeitig hoher Fertigungspräzision erheblich verkürzen lässt. Zudem kann in vielen Fällen auf etwaige Nachbearbeitungsschritte verzichtet werden, wodurch sich weitere Zeit- und Kosteneinsparungen ergeben. Die vorstehend im Zusammenhang mit dem erfindungsgemäßen Verfahren vorgestellten bevorzugten Ausführungsformen und Weiterbildungen und deren Vorteile gelten entsprechend für die erfindungsgemäße Vorrichtung und umgekehrt. Es ist dabei zu betonen, dass an Stelle von Bauteilen für Strömungsmaschinen grundsätzlich natürlich auch sonstige Bauteile mit Hilfe der erfindungsgemäßen Vorrichtung hergestellt werden können.

In einer vorteilhaften Ausgestaltung der Erfindung ist vorgesehen, dass die Ermittlungseinrichtung mit einer Steuer- und/oder Regeleinrichtung gekoppelt ist, wobei die Steuer- und/oder Regeleinrichtung ausgelegt ist, die Elektronenquelle in Abhängigkeit einer Schichtinformation des herzustellenden Bauteils und/oder in Abhängigkeit der Werkstoffinformation zu betreiben. Auf diese Weise ist eine besonders hohe Fertigungspräzision unter Minimierung der Herstellungszeit des Bauteils gewährleistet.

Weitere Vorteile ergeben sich, wenn die Vorrichtung Mittel zum Erzeugen von zumindest zwei, vorzugsweise von mindestens vier, Elektronenstrahlen umfasst. Dies erlaubt bei gleichzeitig hoher Maßhaltigkeit eine erhebliche Steigerung der Herstellungsgeschwindigkeit. Weitere sich ergebende Vorteile sind den vorhergehenden Beschreibungen zu entnahmen.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine Prinzipdarstellung eines ersten Ausführungsbeispiels einer erfindungsgemäßen Vorrichtung zur Herstellung eines Bauteils; und
- Fig. 2: eine Prinzipdarstellung eines zweiten Ausführungsbeispiels der erfindungsgemäßen Vorrichtung zur Herstellung eines Bauteils.

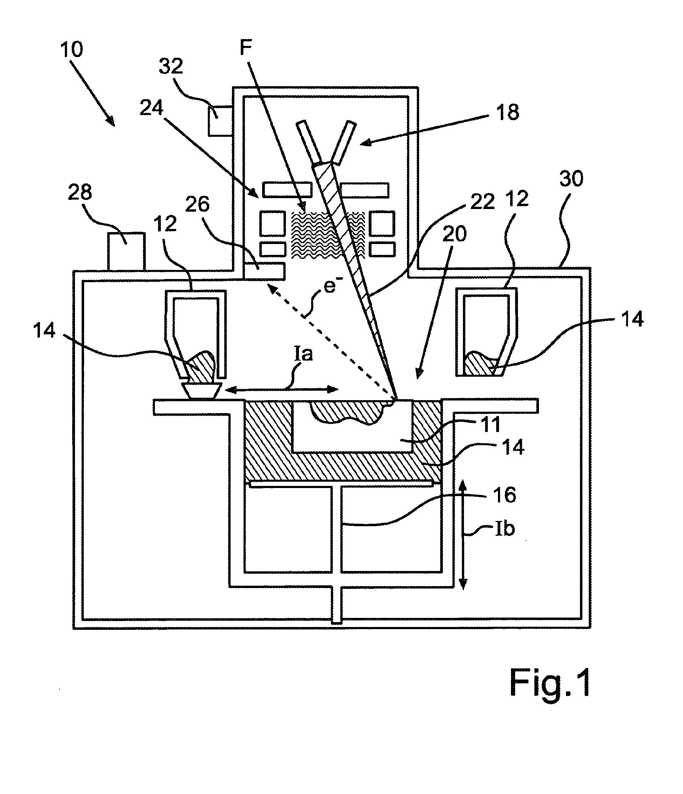

Fig. 1 zeigt eine Prinzipdarstellung eines ersten Ausführungsbeispiels einer erfindungsgemäßen Vorrichtung 10 zur Herstellung eines Bauteils 11, welches vorliegend zur Verwendung in einer Strömungsmaschine vorgesehen ist. Gleiche oder funktionsgleiche Elemente sind dabei im Folgenden mit identischen Bezugszeichen versehen. Bei dem Bauteil 11 handelt es sich im gezeigten Ausführungsbeispiel um ein hohles Strukturbauteil einer Turbine. Die Vorrichtung 10 umfasst eine gemäß Doppelpfeil Ia bewegbare Pulverzuführung 12 zum Auftrag von mindestens einem pulverförmigen Bauteilwerkstoff 14 auf eine gemäß Doppelpfeil Ib bewegbare Bauteilplattform 16. Weiterhin umfasst die Vorrichtung 10 zwei Elektronenquellen 18, mittels welchen im Bereich einer Aufbau- und Fügezone 20 der Bauteilplattform 16 Elektronenstrahlen 22 für ein schichtweises und lokales Verschmelzen und/oder Versintern des Bauteilwerkstoffs 14 erzeugt sind. Zum Einstellen der räumlichen Ablenkung, der Fokussierung und der thermischen Leistung der Elektronenstrahlen 22 umfasst die Vorrichtung 10 weiterhin eine Einrichtung 24 zum Erzeugen von elektromagnetischen Feldern F. Mittels der Einrichtung 24 können die Elektronenstrahlen 22 der Elektronenquellen 18 - wie vorliegend gezeigt - zu einem Strahl vereinigt, voneinander getrennt oder in mehrere Elektronenstrahlen 22 aufgespalten werden.

Zur Kontrolle des Herstellungsverfahrens weist die Vorrichtung 10 eine Detektionseinrichtung 26 zum Erfassen von durch Wechselwirkung der Elektronenstrahlen 22 mit dem Bauteilwerkstoff 14 emittierten Elektronen e⁻ sowie eine mit der Detektionseinrichtung 26 gekoppelte Ermittlungseinrichtung 28 auf. Die Kopplungen zwischen den einzelnen Einrichtungen der Vorrichtung 10 sind aus Gründen der Übersichtlichkeit auch im Weiteren nicht dargestellt. Bei den erfassten Elektronen e⁻ handelt es sich bevorzugt um Sekundärelektronen, rückgestreute Elektronen und/oder Auger-Elektronen. Mit Hilfe der Ermittlungseinrichtung 28 kann anhand einer die erfassten Elektronen e⁻ charakterisierenden Steuerinformation der Detektionseinrichtung 26 eine eine Topographie des verschmolzenen und/oder versinterten Bauteilwerkstoffs 14 charakterisierende Werkstoffinformation ermittelt werden. Mit anderen Worten kann das Vermessen der Oberfläche und der Oberflächenbeschaffenheit des Bauteils 11 während des Bearbeitungsprozesses stattfinden. Dabei kann grundsätzlich vorgesehen sein, dass der Elektronenstrahl 22 so schnell auf zwei oder mehr unterschiedliche Positionen gelenkt wird, dass der Bauteilwerkstoff 14 an all diesen Positionen quasi "gleichzeitig" verschmolzen bzw. versintert wird. Bei Bedarf kann der Elektronenstrahl 22 zu diesem Zweck wie vorstehend beschrieben in mehrere Teilstrahlen aufgeteilt werden. Weiterhin kann vorgesehen sein, dass der Elektronenstrahl 22 wiederholt auf diese unterschiedlichen Positionen gelenkt wird, so dass der Schmelz- bzw. Sinterprozess an den betreffenden Positionen für einen gewünschten Zeitraum möglichst durchgängig aufrechterhalten wird.

Um die Herstellung des Bauteils 11 sauerstofffrei durchführen zu können und um eine unerwünschte Ablenkung sowohl der Elektronenstrahlen 22 als auch der Elektronen e⁻ zu vermeiden, umfasst die Vorrichtung 10 eine Vakuumkammer 30, innerhalb welcher während der Herstellung des Bauteils 11 ein Hochvakuum erzeugt wird.

Zur Einstellung der Elektronenstrahlen 22 sind die Elektronenquellen 18, die Einrichtung 24 und die Ermittlungseinrichtung 28 mit einer digitalen Steuer- und/oder Regeleinrichtung 32 gekoppelt, welche ausgelegt ist, die Elektronenquellen 18 in Abhängigkeit einer Schichtinformation des herzustellenden Bauteils 11 und/oder in Abhängigkeit der ermittelten Werkstoffinformation anzusteuern. Die Steuer- und/oder Regeleinrichtung 32 erlaubt somit eine schnelle und präzise Anpassung der Elektronenstrahlen 22 an die Eigenschaften der jeweiligen Bauteilschicht. Weiterhin ist die Steuer- und/oder Regeleinrichtung 32 in der Lage, die Elektronenquellen 18 derart zu steuern, dass die Elektronenstrahlen 22 sequenziell mehrere Schmelz- und/oder Sinterpunkte auf der Aufbau- und Fügezone 20 in kürzester Abfolge anspringen. Räumlich kann die Ablenkung und die Fokussierung der Elektronenstrahlen 22 synchron mit der Leistung gesteuert werden. Gleichzeitig steht durch ein Erfassung und Auswertung der emittierten Elektronen e⁻ eine "Online-Überwachung" des Herstellungsverfahrens zur Verfügung. Durch die mehreren Elektronenstrahlen 22 und die unmittelbare Kontrollmöglichkeit des Schmelz- und/oder Sintervorgangs ergibt sich eine hohe Baugeschwindigkeit bei gleichzeitig hoher Fertigungspräzision. Durch die zwei oder mehr Elektronenquellen 18 gibt es zudem keine Beschränkung des Bauraums mehr, da die Elektronenquellen 18 frei und gegebenenfalls bewegbar innerhalb der Vakuumkammer 30 angeordnet werden können. Durch eine entsprechende Anordnung mehrerer Elektronenquellen 18 kann der Baubereich der Vorrichtung 10 nahezu unbeschränkt erweitert werden.

Anhand der Vorrichtung 10 wird im Folgenden die Herstellung des Bauteils 11 beschrieben werden. Zunächst wird der pulverförmige Bauteilwerkstoff 14 mit Hilfe der Pulverzuführung 12 schichtförmig auf der Bauteilplattform 16 im Bereich der Aufbau- und Fügezone 20 aufgetragen. Alternativ können auch mehrere unterschiedliche Bauteilwerkstoffe 14 aufgetragen werden, wobei jede Bauteilschicht gegebenenfalls unterschiedlich ausbildbar ist. Anschließend wird der Bauteilwerkstoff 14 schichtweise lokal Verschmolzen und/oder Versintert, indem über die Elektronenstrahlen 22 Energie zugeführt wird. Die Energiezuführung über die Elektronenstrahlen 22 wird in der vorstehend beschriebenen Weise in Abhängigkeit einer Schichtinformation des Bauteils 11 und/oder in Abhängigkeit der die Topographie des verschmolzenen und/oder versinterten Bauteilwerkstoffs 14 charakterisierenden Werkstoffinformation gesteuert. Nach dem Verschmelzen und/oder Versintern wird die Bauteilplattform 16 um eine vordefinierte Schichtdicke abgesenkt. Die genannten Schritte werden dann bis zur Fertigstellung des Bauteils 11 wiederholt.

Falls gewünscht kann das Bauteil 11 nach seiner Herstellung zusätzlich noch oberflächenbearbeitet, insbesondere feinbearbeitet werden. Hierzu wird der Bauteiloberfläche des Bauteils 11 erneut mittels wenigstens eines Elektronenstrahls 22 Energie zugeführt, um die gewünschte Oberflächenstruktur zu erzeugen. Beispielsweise kann die Bauteiloberfläche in der Art eines Elektronenstrahl-Lithographie-Verfahrens und/oder durch Umschmelzen bearbeitet werden. Dabei wird die momentane Oberflächenstruktur des Bauteils 11 analog zu der vorstehend beschriebenen Weise wiederum durch Erfassen der durch Wechselwirkung des Elektronenstrahls 22 mit der Bauteiloberfläche emittierten Elektronen e⁻ und anschließender Ermittlung einer eine Topographie des Bauteils 11 charakterisierenden Bauteilinformation ermittelt. Die räumliche Ablenkung, Fokussierung und/oder thermische Leistung des wenigstens einen Elektronenstrahls 22 kann unter Berücksichtigung dieser Bauteilinformation optimal eingestellt werden, um die gewünschte Oberflächenstruktur zu erzeugen.

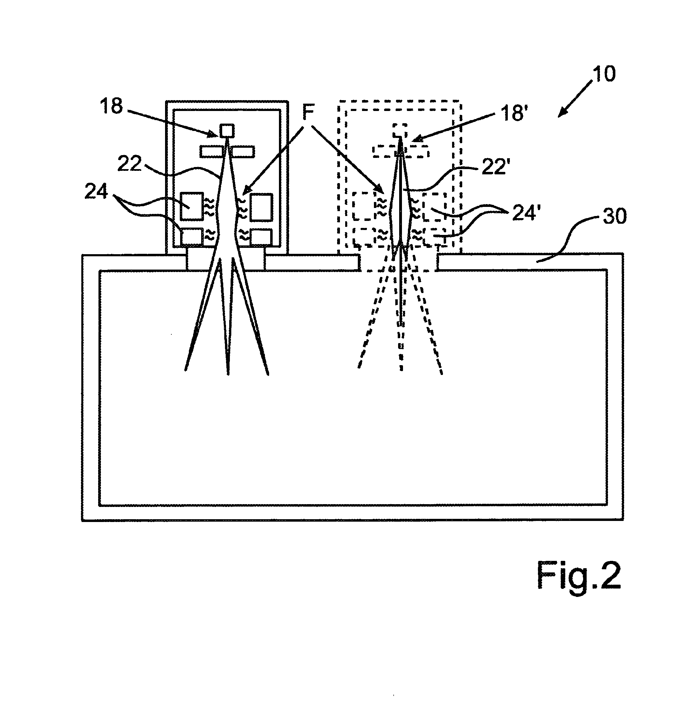

Fig. 2 zeigt eine Prinzipdarstellung eines zweiten Ausführungsbeispiels der erfindungsgemäßen Vorrichtung 10 zur Herstellung eines Bauteils 11. Verschiedene im Zusammenhang mit Fig. 1 dargestellten und erläuterten Bauelemente der Vorrichtung 10 sind in Fig. 2 aus Gründen der Übersichtlichkeit nicht dargestellt. Im Unterschied zum vorhergehenden Ausführungsbeispiel umfasst die in Fig. 2 gezeigte Vorrichtung 10 zwei räumlich getrennte Elektronenquellen 18, 18', mittels welchen räumlich getrennte Elektronenstrahlen 22, 22' für ein schichtweises und lokales Verschmelzen und/oder Versintern des Bauteilwerkstoffs 14 erzeugt werden. Zum Einstellen der räumlichen Ablenkung, der Fokussierung und der thermischen Leistung der Elektronenstrahlen 22, 22' umfasst die Vorrichtung 10 weiterhin jeweilige Einrichtungen 24, 24' zum Erzeugen von dem jeweiligen Elektronenstrahl 22, 22' zugeordneten elektromagnetischen Feldern F. Mit Hilfe der Einrichtungen 24, 24' können die Elektronenstrahlen 22, 22' der Elektronenquellen 18, 18' - wie vorstehend erläutert - zu einem Strahl vereinigt, getrennt oder aufgespalten werden. Dabei können die Elektronenstrahlen 22, 22' unabhängig voneinander verändert werden, wodurch das Herstellungsverfahren besonders flexibel durchführbar ist. Die Aufteilung kann parallel oder sequentiell erfolgen. Insbesondere können mehrere Schmelz- und/oder Sinterpunkte auf der Aufbau- und Fügezone 20 (nicht gezeigt) gleichzeitig erzeugt werden, wobei die Ablenkung, Fokussierung und Leistung der Elektronenstrahlen 22, 22' unabhängig voneinander gesteuert werden kann. Dabei kann grundsätzlich vorgesehen sein, dass die Elektronenstrahlen 22, 22' so schnell auf zwei oder mehr unterschiedliche Positionen gelenkt werden, dass der Bauteilwerkstoff 14 an all diesen Positionen quasi "gleichzeitig" verschmolzen bzw. versintert wird. Weiterhin kann vorgesehen sein, dass mindestens einer der Elektronenstrahlen 22, 22' in zwei oder mehr Teilstrahlen aufgeteilt wird. Weiterhin kann vorgesehen sein, dass die Elektronenstrahlen 22, 22' wiederholt auf diese unterschiedlichen Positionen gelenkt werden, so dass der Schmelz- bzw. Sinterprozess an den betreffenden Positionen nicht abbricht und durchgängig aufrechterhalten wird. Gleichzeitig kann das Vermessen der Oberflächengeometrie bzw. der Oberflächenbeschaffenheit des Bauteils 11 in der vorstehend beschriebenen Weise durchgeführt werden. Hierdurch wird eine besonders hohe Aufbaurate bei gleichzeitig erhöhter Fertigungspräzision ermöglicht. Darüber hinaus entfällt nahezu jede Bauraumbeschränkung, so dass auch große und/oder besonders komplexe Bauteile 11 problemlos hergestellt werden können. Durch weitere Elektronenquellen 18 kann die Aufbau- und Fügezone 20 (nicht gezeigt) zudem nahezu unbeschränkt erweitert werden, so dass das Verfahren parallelisierbar ist und einfach skaliert werden kann.

## Patentansprüche

1. Verfahren zur Herstellung eines Bauteils (11), insbesondere eines Bauteils (11) einer Turbine oder eines Verdichters, folgende Schritte umfassend:
a) Schichtweises Auftragen von mindestens einem pulverförmigen Bauteilwerkstoff (14) auf eine Bauteilplattform (16) im Bereich einer Aufbau- und Fügezone (20);
b) Schichtweises und lokales Verschmelzen und/oder Versintern des Bauteilwerkstoffs (14) durch Zuführen von Energie mittels wenigstens eines Elektronenstrahls (22) im Bereich der Aufbau- und Fügezone (20);
c) Schichtweises Absenken der Bauteilplattform (16) um eine vordefinierte Schichtdicke; und
d) Wiederholen der Schritte a) bis c) bis zur Fertigstellung des Bauteils (11), **dadurch gekennzeichnet, dass** durch Wechselwirkung des Elektronenstrahls (22) mit dem Bauteilwerkstoff (14) emittierte Elektronen (e⁻) erfasst werden, wonach anhand der emittierten Elektronen (e⁻) eine eine Topographie des verschmolzenen und/oder versinterten Bauteilwerkstoffs charakterisierende Werkstoffinformation ermittelt wird.

2. Verfahren nach Anspruch 1, **dadurch gekennzeichnet, dass** die Elektronen (e⁻) einmal und/oder bei mehreren Wiederholungen der Schritte a) bis c) und/oder bei jeder Wiederholung der Schritte a) bis c) erfasst werden.

3. Verfahren nach Anspruch 1 oder 2, **dadurch gekennzeichnet, dass** in Schritt b) eine räumliche Ablenkung und/oder eine Fokussierung und/oder eine thermische Leistung des wenigstens einen Elektronenstrahls (22) in Abhängigkeit einer Schichtinformation des herzustellenden Bauteils (11) und/oder in Abhängigkeit der Werkstoffinformation eingestellt wird.

4. Verfahren nach einem der Ansprüche 1 bis 3, **dadurch gekennzeichnet, dass** die räumliche Ablenkung und/oder die Fokussierung und/oder die thermische Leistung des wenigstens einen Elektronenstrahls (22) mittels zumindest eines elektromagnetischen und/oder magnetischen Felds (F) eingestellt wird.

5. Verfahren nach einem der Ansprüche 1 bis 4, **dadurch gekennzeichnet, dass** der Bauteilwerkstoff (14) in Schritt b) durch wenigstens zwei, vorzugsweise durch mindestens vier, Elektronenstrahlen (22) verschmolzen und/oder versintert wird.

6. Verfahren nach einem der Ansprüche 1 bis 5, **dadurch gekennzeichnet, dass** eine relative Position zumindest einer Elektronenquelle (18), die zur Herstellung wenigstens eines Elektronenstrahls (22) verwendet wird, gegenüber der Aufbau- und Fügezone (20) in Abhängigkeit der Schichtinformation des herzustellenden Bauteils (11) und/oder in Abhängigkeit der Werkstoffinformation eingestellt wird.

7. Verfahren nach einem der Ansprüche 1 bis 6, **dadurch gekennzeichnet, dass** zumindest Schritt b) unter Vakuum, insbesondere unter Hochvakuum, durchgeführt wird.

8. Verfahren nach einem der Ansprüche 1 bis 7, **dadurch gekennzeichnet, dass** das Bauteil (11) nach seiner Herstellung oberflächenbearbeitet, insbesondere feinbearbeitet wird.

9. Verfahren nach Anspruch 8, **dadurch gekennzeichnet, dass** eine Bauteiloberfläche des Bauteils (11) mittels wenigstens eines Elektronenstrahls (22), insbesondere durch Elektronenstrahl-Lithographie und/oder Umschmelzen, bearbeitet wird.

10. Verfahren nach Anspruch 9, **dadurch gekennzeichnet, dass** bei der Bearbeitung des Bauteils (11) durch Wechselwirkung des Elektronenstrahls (22) mit der Bauteiloberfläche emittierte Elektronen (e⁻) erfasst werden, wonach anhand der emittierten Elektronen (e⁻) eine eine Topographie des Bauteils (11) charakterisierende Bauteilinformation ermittelt wird.

11. Verfahren nach Anspruch 10, **dadurch gekennzeichnet, dass** eine räumliche Ablenkung und/oder eine Fokussierung und/oder eine thermische Leistung des wenigstens einen Elektronenstrahls (22) in Abhängigkeit der Bauteilinformation eingestellt wird.

12. Vorrichtung (10) zur Herstellung eines Bauteils (11), insbesondere eines Bauteils (11) einer Turbine oder eines Verdichters, mit mindestens einer Pulverzuführung (12) zum Auftrag von mindestens einem pulverförmigen Bauteilwerkstoff (14) auf eine Bauteilplattform (16) sowie mit mindestens einer Elektronenquelle (18), mittels welcher im Bereich einer Aufbau- und Fügezone (20) der Bauteilplattform (16) zumindest ein Elektronenstrahl (22) für ein schichtweises und lokales Verschmelzen und/oder Versintern des Bauteilwerkstoffs (14) erzeugbar ist, **dadurch gekennzeichnet, dass** die Vorrichtung (10) wenigstens eine Detektionseinrichtung (26) zum Erfassen von durch Wechselwirkung des Elektronenstrahls (22) mit dem Bauteilwerkstoff (14) emittierten Elektronen (e⁻) sowie eine mit der Detektionseinrichtung (26) gekoppelte Ermittlungseinrichtung (28) umfasst, mittels welcher anhand einer die erfassten Elektronen (e⁻) charakterisierenden Steuerinformation der Detektionseinrichtung (26) eine eine Topographie des verschmolzenen und/oder versinterten Bauteilwerkstoffs (14) charakterisierende Werkstoffinformation ermittelbar ist.

13. Vorrichtung (10) nach Anspruch 12, **dadurch gekennzeichnet, dass** die Ermittlungseinrichtung (28) mit einer Steuer- und/oder Regeleinrichtung (32) gekoppelt ist, wobei die Steuer- und/oder Regeleinrichtung (32) ausgelegt ist, die Elektronenquelle (18) in Abhängigkeit einer Schichtinformation des herzustellenden Bauteils (11) und/oder in Abhängigkeit der Werkstoffinformation zu betreiben.

14. Vorrichtung (10) nach Anspruch 12 oder 13, **dadurch gekennzeichnet, dass** die Vorrichtung (10) Mittel zum Erzeugen von zumindest zwei, vorzugsweise von mindestens vier, Elektronenstrahlen (22) umfasst.

## Claims

1. Method for producing a component (11), in particular a component (11) of a turbine or a compressor, comprising the following steps:
a) application in layers of at least one pulverulent component material (14) to a component platform (16) in the region of a build-up and joining zone (20);
b) melting and/or sintering of the component material (14) in layers and locally by supplying energy by means of at least one electron beam (22) in the region of the build-up and joining zone (20);
c) layer-wise lowering of the component platform (16) by a predefined layer thickness; and
d) repetition of steps a) to c) until the component (11) is completed,
**characterised in that** electrons (e⁻) emitted by interaction of the electron beam (22) with the component material (14) are detected, whereupon with the aid of the electrons (e⁻) that are emitted material information characterising the topography of the melted and/or sintered component material is ascertained.

2. Method according to claim 1, **characterised in that** the electrons (e⁻) are detected once and/or when the steps a) to c) are repeated several times and/or with each repetition of the steps a) to c).

3. Method according to claim 1 or 2, **characterised in that** in step b) a spatial deflection and/or focussing and/or a thermal output of the at least one electron beam (22) are/is adjusted as a function of the layer information pertaining to the component (11) to be produced and/or as a function of the material information.

4. Method according to one of claims 1 to 3, **characterised in that** the spatial deflection and/or the focussing and/or the thermal output of the at least one electron beam (22) are/is adjusted by means of at least one electromagnetic and/or magnetic field (F).

5. Method according to one of claims 1 to 4, **characterised in that** the component material (14) is melted and/or sintered in step b) by means of at least two, preferably by means of at least four, electron beams (22).

6. Method according to one of claims 1 to 5, **characterised in that** a relative position of at least one electron source (18), which is used to produce at least one electron beam (22), is adjusted with respect to the build-up and joining zone (20) as a function of the layer information of the component (11) to be produced and/or as a function of the material information.

7. Method according to one of claims 1 to 6, **characterised in that** at least step b) is carried out under vacuum, in particular under a high vacuum.

8. Method according to one of claims 1 to 7, **characterised in that** the component (11) is surface-machined, in particular fine-machined, after its production.

9. Method according to claim 8, **characterised in that** a component surface of the component (11) is machined by means of at least one electron beam (22), in particular by means of electron-beam lithography and/or re-melting.

10. Method according to claim 9, **characterised in that** during the machining of the component (11) electrons (e⁻) emitted by interaction of the electron beam (22) with the component surface are detected, whereupon with the aid of the electrons (e⁻) that are emitted component information characterising the topography of the component (11) is ascertained.

11. Method according to claim 10, **characterised in that** spatial deflection and/or focussing and/or a thermal output of the at least one electron beam (22) are/is adjusted as a function of the component information.

12. A device (10) for producing a component (11), in particular a component (11) of a turbine or a compressor, having at least one powder supply (12) for application of at least one pulverulent component material (14) to a component platform (16) and also having at least one electron source (18) by means of which in the region of a build-up and joining zone (20) of the component platform (16) at least one electron beam (22) for melting and/or sintering the component material (14) in layers and locally can be generated, **characterised in that** the device (10) comprises at least one detection unit (26) for detecting electrons (e⁻) emitted by interaction of the electron beam (22) with the component material (14) and also an ascertaining unit (28) which is coupled to the detection unit (26) and by means of which with the aid of control information of the detection unit (26) characterising the detected electrons (e⁻) material information characterising the topography of the melted and/or sintered component material (14) can be ascertained.

13. A device (10) according to claim 12, **characterised in that** the ascertaining unit (28) is coupled to a control and/or regulating unit (32), wherein the control and/or regulating unit (32) is designed to operate the electron source (18) as a function of the layer information of the component (11) to be produced and/or as a function of the material information.

14. A device (10) according to claim 12 or 13, **characterised in that** the device (10) comprises means to generate at least two, preferably at least four, electron beams (22).

## Revendications

1. Procédé pour la fabrication d'un composant (11), en particulier d'un composant (11) d'une turbine ou d'un compresseur, comprenant les étapes suivantes :
a) dépôt en couches d'au moins un matériau du composant
en poudre (14) sur une plate-forme de composant (16) dans la région d'une zone de construction et de jonction (20) ;
b) fusion et/ou frittage local et en couches du matériau du composant (14) par apport d'énergie au moyen d'au moins un faisceau d'électrons (22) dans la région de la zone de construction et de jonction (20) ;
c) descente par couches de la plate-forme de composant (16) d'une épaisseur de couche prédéfinie ; et
d) répétition des étapes a) à c) jusqu'à l'achèvement du composant (11),
**caractérisé en ce que** l'on détecte des électrons (e⁻) émis par interaction du faisceau d'électrons (22) avec le matériau du composant (14), puis on détermine, à l'aide des électrons émis (e⁻), une information relative au matériau caractérisant une topographie du matériau du composant fondu et/ou fritté.

2. Procédé selon la revendication 1, **caractérisé en ce que** l'on détecte les électrons (e⁻) une fois et/ou lors de plusieurs répétitions des étapes a) à c) et/ou lors de chaque répétition des étapes a) à c).

3. Procédé selon la revendication 1 ou 2, **caractérisé en ce que** l'on règle à l'étape b) une déviation spatiale et/ou une focalisation et/ou une puissance thermique dudit au moins un faisceau d'électrons (22) en fonction d'une information de couches du composant à fabriquer (11) et/ou en fonction de l'information relative au matériau.

4. Procédé selon l'une quelconque des revendications 1 à 3, **caractérisé en ce que** l'on règle la déviation spatiale et/ou la focalisation et/ou la puissance thermique dudit au moins un faisceau d'électrons (22) au moyen d'au moins un champ électromagnétique et/ou magnétique (F).

5. Procédé selon l'une quelconque des revendications 1 à 4, **caractérisé en ce que** l'on fond et/ou l'on fritte le matériau du composant (14) à l'étape b) à l'aide d'au moins deux, de préférence à l'aide d'au moins quatre faisceaux d'électrons (22).

6. Procédé selon l'une quelconque des revendications 1 à 5, **caractérisé en ce que** l'on règle une position relative d'au moins une source d'électrons (18), qui est utilisée pour la production d'au moins un faisceau d'électrons (22), par rapport à la zone de construction et de jonction (20) en fonction de l'information de couches du composant à fabriquer (11) et/ou en fonction de l'information relative au matériau.

7. Procédé selon l'une quelconque des revendications 1 à 6, **caractérisé en ce que** l'on exécute au moins l'étape b) sous vide, en particulier sous un vide poussé.

8. Procédé selon l'une quelconque des revendications 1 à 7, **caractérisé en ce que** l'on soumet le composant (11), après sa fabrication, à un usinage de surface, en particulier à un usinage de finition.

9. Procédé selon la revendication 8, **caractérisé en ce que** l'on usine une surface de composant du composant (11) au moyen d'au moins un faisceau d'électrons (22), en particulier par lithographie par faisceau d'électrons et/ou par refusion.

10. Procédé selon la revendication 9, **caractérisé en ce que** l'on détecte des électrons (e⁻) émis lors de l'usinage du composant (11) par interaction du faisceau d'électrons (22) avec la surface de composant, puis on détermine, à l'aide des électrons émis (e⁻), une information relative au matériau caractérisant une topographie du composant (11).

11. Procédé selon la revendication 10, **caractérisé en ce que** l'on règle une déviation spatiale et/ou une focalisation et/ou une puissance thermique dudit au moins un faisceau d'électrons (22) en fonction de l'information relative au composant.

12. Dispositif (10) pour la fabrication d'un composant (11), en particulier d'un composant (11) d'une turbine ou d'un compresseur, avec au moins une arrivée de poudre (12) pour le dépôt d'au moins un matériau de composant en poudre (14) sur une plate-forme de composant (16) ainsi qu'avec au moins une source d'électrons (18), au moyen de laquelle on peut produire, dans la région d'une zone de construction et de jonction (20) de la plate-forme de composant (16), au moins un faisceau d'électrons (22) pour une fusion et/ou un frittage local et par couches du matériau du composant (14), **caractérisé en ce que** le dispositif (10) comprend au moins un dispositif de détection (26) pour détecter des électrons (e⁻) émis par interaction du faisceau d'électrons (22) avec le matériau du composant (14) ainsi qu'un dispositif de détermination (28) couplé au dispositif de détection (26), au moyen duquel on peut déterminer, à l'aide d'une information de commande du dispositif de détection (26) caractérisant les électrons détectés (e⁻), une information relative au matériau caractérisant une topographie du matériau du composant (14) fondu et/ou fritté.

13. Dispositif (10) selon la revendication 12, **caractérisé en ce que** le dispositif de détermination (28) est couplé à un dispositif de commande et/ou de régulation (32), le dispositif de commande et/ou de régulation (32) étant conçu pour faire fonctionner la source d'électrons (18) en fonction d'une information de couches du composant à fabriquer (11) et/ou en fonction de l'information relative au matériau.

14. Dispositif (10) selon la revendication 12 ou 13, **caractérisé en ce que** le dispositif (10) comprend des moyens pour produire au moins deux, de préférence au moins quatre faisceaux d'électrons (22).
